# EUROPÄISCHE PATENTANMELDUNG

(11) **EP 4 647 856 A1**
(43) Veröffentlichungstag der Anmeldung: **12.11.2025**
(21) Anmeldenummer: 25171004.2
(22) Anmeldetag: 16.04.2025
(51) Int. Cl.: G05B 9/03, G05B 19/4061, G07C 9/00, G08B 13/24, G08B 29/12, G08B 29/18

(54) **ZÄHLVORRICHTUNG FÜR EIN SICHERHEITSSYSTEM ZUR ABSICHERUNG EINES GEFAHRENBEREICHS IN DER FABRIKAUTOMATION UND VERFAHREN ZUM SICHEREN ERFASSEN VON PASSAGEN ÜBER EINE GRENZE ZWISCHEN EINEM SICHEREN UND EINEM NICHT SICHEREN BEREICH**

(30) Priorität: 10.05.2024 DE 102024113138
(71) Anmelder: SICK AG, 79183 Waldkirch (DE)
(72) Erfinder: HAMMES, Dr. Markus, 79117 Freiburg (DE); MAYER, Dr. Nikolaus, 79110 Freiburg (DE)
(74) Vertreter: Manitz Finsterwald Patent- und Rechtsanwaltspartnerschaft mbB

(57) **Zusammenfassung**

In einer Ausführungsform umfasst eine Zählvorrichtung (6) für ein Sicherheitssystem (5) zur Absicherung eines Gefahrenbereichs in der Fabrikautomation einen ersten Messkanal (10) zum Bereitstellen eines ersten Messsignals (M1) in Abhängigkeit einer von dem ersten Messkanal (10) erfassten ersten Anzahl von Passagen über eine Grenze (3) zwischen einem sicheren und einem nicht sicheren Bereich (1, 2), einen zweiten Messkanal (20) zum Bereitstellen eines zweiten Messsignals (M2) in Abhängigkeit einer von dem zweiten Messkanal (20) erfassten zweiten Anzahl von Passagen über die Grenze (3) zwischen dem sicheren und dem nicht sicheren Bereich (1, 2), und eine Steuereinheit (30) zum Bereitstellen eines Ergebnissignals (ES) in Abhängigkeit eines Vergleichs der ersten Anzahl mit der zweiten Anzahl, wobei das Ergebnissignal (ES) dazu geeignet ist, einen Fehlerzustand zu signalisieren, wenn die erste Anzahl ungleich der zweiten Anzahl ist. Des Weiteren ist ein Verfahren zum sicheren Erfassen von Passagen über eine Grenze (3) zwischen einem sicheren und einem nicht sicheren Bereich (1, 2) angegeben.

## Beschreibung

Die vorliegende Erfindung betrifft eine Zählvorrichtung für ein Sicherheitssystem zur Absicherung eines Gefahrenbereichs in der Fabrikautomation und ein Verfahren zum sicheren Erfassen von Passagen über eine Grenze zwischen einem sicheren und einem nicht sicheren Bereich.

Durch die Automatisierung von Fabriken entstehen in diesen für Menschen sichere Bereiche, die frei von gefährlichen Maschinen oder Automaten sind, und für Personen nicht sichere Bereiche, in denen gefährliche Maschinen oder selbstfahrende, automatisch gesteuerte Fahrzeuge präsent sind, vor denen Menschen besonders geschützt werden müssen. Hierfür werden bekanntermaßen einfache Schutzfeldfunktionen eingerichtet, bei denen ein Gefahr bringender Zustand eindeutig definiert ist und von einem verfügbarkeitseinschränkenden Zustand unterschieden werden kann. Darüber hinaus kann es jedoch wünschenswert sein, eine Anzahl von Personen, die sich in einem gefährlichen Bereich aufhält, mit hoher Sicherheit zu erfassen. In diesem Zusammenhang ist es notwendig, die Anzahl an Durchgängen zwischen zwei verschiedenen Bereichen eines automatisierten Arbeitsumfeldes, beispielsweise einer Fabrik oder Lagerhalle, durch Personen in beiden Richtungen sicher zu zählen. Ein typischer Anwendungsfall besteht darin, einen Durchgang oder Übergang von einem normalen Arbeitsbereich, also einem sicheren Bereich, in einen Bereich mit potentieller Gefährdung, also einen nicht sicheren Bereich, zu überwachen. Üblicherweise wird hierfür ein Durchgangszähler oder Personenzähler eingesetzt. Gemäß geltender Sicherheitsnormen, beispielsweise IEC61508 oder ISO13849 muss der Durchgangszähler sicher ausgeführt sein, damit der von ihm ermittelte Zählerstand in sicherheitsrelevanter Art und Weise für die Risikominimierung eingesetzt werden kann.

Derzeit bekannte oder verfügbare Durchgangszähler und Personenzähler sind nicht sicher im Sinne der funktionalen Sicherheit. Funktionale Sicherheit bezeichnet den Teil der Sicherheit eines Systems, der von der korrekten Funktion des sicherheitsbezogenen Systems und anderer risikominimierender Maßnahmen abhängt. Herausforderungen bekannter Zählsysteme liegen in der Unterscheidung zwischen Personen und anderen Objekten, beispielsweise den von Personen mitgeführten Gepäckstücken, z.B. einem Flipchart, und der Vereinzelung von Personen in Personengruppen. Bekannte Systeme sind hier bezüglich einer spezifischen Unterscheidungsfähigkeit von Personen und anderen Objekten optimiert, jedoch nicht bezüglich einer besonderen Zuverlässigkeit im Sinne der funktionalen Sicherheit ertüchtigt.

In einem Anwendungsbeispiel steht im Gefahrenbereich ein Roboter, der beim Eintritt einer Person auf Basis eines Signals der Zählvorrichtung sicherheitsgerichtet gestoppt wird. Ein Zählfehler kann immer dann zu einer Gefährdung führen, wenn beim Eintritt in den nicht sicheren Bereich weniger Personen gezählt werden, als tatsächlich eingetreten sind. Gleichermaßen kann ein Zählfehler beim Austritt zu einem gefahrbringenden Zustand führen, wenn der Zählerstand den automatischen Anlauf des Roboters ermöglicht. In diesem Fall kommt es zu einer Gefährdung, wenn der Zähler mehr Personen beim Austritt zählt, als tatsächlich den Bereich verlassen haben.

Eine Aufgabe der vorliegenden Erfindung besteht folglich darin, eine Zählvorrichtung und ein zugehöriges Verfahren anzugeben, welche eine Verbesserung gegenüber dem Stand der Technik erzielt, beispielsweise die Anforderungen der funktionalen Sicherheit erfüllt.

Diese Aufgabe wird gelöst durch die Zählvorrichtung des Anspruchs 1, sowie durch das Verfahren gemäß Anspruch 13.

In einer Ausführungsform weist eine Zählvorrichtung einen ersten Messkanal, einen zweiten Messkanal und eine Steuereinheit auf. Die Zählvorrichtung ist für ein Sicherheitssystem zur Absicherung eines Gefahrenbereichs in der Fabrikautomation ausgebildet und eingerichtet. Der erste Messkanal ist zum Bereitstellen eines ersten Messsignals in Abhängigkeit einer von dem ersten Messkanal erfassten ersten Anzahl von Passagen über eine Grenze zwischen einem sicheren und einem nicht sicheren Bereich ausgelegt. Der zweite Messkanal ist zum Bereitstellen eines zweiten Messsignals in Abhängigkeit einer von dem zweiten Messkanal erfassten zweiten Anzahl von Passagen über die Grenze zwischen dem sicheren und dem nicht sicheren Bereich eingerichtet. Die Steuereinheit ist zum Bereitstellen eines Ergebnissignals in Abhängigkeit eines Vergleichs der ersten Anzahl mit der zweiten Anzahl ausgelegt. Dabei ist das Ergebnissignal dazu geeignet, einen Fehlerzustand zu signalisieren, wenn die erste Anzahl ungleich der zweiten Anzahl ist.

In der erfindungsgemäßen zweikanaligen Zählvorrichtung ermittelt jeder Kanal unabhängig vom anderen Kanal eine Anzahl von Passagen über die Grenze zwischen dem sicheren und dem nicht sicheren Bereich. Eine Passage bezieht sich auf einen Durchtritt, Durchgang oder Übertritt über diese Grenze und betrifft sowohl die Richtung vom sicheren in den nicht sicheren Bereich als auch die entgegengesetzte Richtung vom nicht sicheren in den sicheren Bereich. Der erste Messkanal ermittelt die erste Anzahl von Passagen, während zeitgleich der zweite Messkanal die zweite Anzahl von Passagen ermittelt. Das Ergebnissignal ist so ausgelegt, dass es einen Fehlerzustand anzeigt, wenn die erste und die zweite Anzahl voneinander abweichen.

Die Redundanz, die sich aus dem zweikanaligen Ansatz der angegebenen Zählvorrichtung ergibt, in Verbindung mit der im Ergebnissignal reflektierten Auswertung der Zählergebnisse ermöglicht mit Vorteil eine Erfüllung der Anforderungen der funktionalen Sicherheit. Zudem wird es mit Hilfe der Signalisierung von Fehlerzuständen im Ergebnissignal möglich, einen Fehlerzustand, beispielsweise innerhalb der Zählvorrichtung, auch automatisch zu korrigieren.

Die eingangs aufgeführten Definitionen gelten auch für die weiteren Ausführungen, sofern nichts anderes angegeben ist.

Die Erfassung in dem ersten und dem zweiten Messkanal kann dabei beispielsweise optisch erfolgen oder per Radar.

Gemäß einer Weiterbildung umfasst der erste Messkanal ein erstes Sensorsystem und einen damit verbundenen ersten Zähler. Der zweite Messkanal umfasst das erste Sensorsystem, eine damit verbundene Umwandlungseinheit und einen damit verbundenen zweiten Zähler. Alternativ umfasst der zweite Messkanal ein zweites Sensorsystem und einen damit verbundenen zweiten Zähler.

Sowohl der erste Zähler als auch der zweite Zähler werden so betrieben, dass der jeweilige Zähler bei einer in dem jeweiligen Messkanal erfassten Passage in eine Richtung, beispielsweise von dem sicheren in den nicht sicheren Bereich, inkrementiert wird, wohingegen der jeweilige Zähler bei einer erfassten Passage in die entgegengesetzte Richtung, also im vorliegenden Beispiel vom sicheren in den nicht sicheren Bereich, dekrementiert wird. Bei Eintritt in den sicheren Bereich wird also beispielsweise inkrementiert, während bei Austritt aus dem sicheren Bereich dekrementiert wird.

Der erste und der zweite Zähler zählen die Passagen über die Grenze zwischen dem sicheren und nicht sicheren Bereich also aufgrund ihrer Zugehörigkeit zu einem jeweiligen anderen Messkanal unabhängig voneinander. Dies ermöglicht es, fehlerhafte Zählereignisse, die sich in voneinander abweichenden Zählerständen manifestieren, zu erkennen und als Fehlerzustand zu signalisieren.

Der zweite Messkanal kann dabei gemäß einer möglichen Implementierung das erste Sensorsystem des ersten Messkanals wiederverwenden, wobei der zweite Messkanal in diesem Fall die Umwandlungseinheit umfasst, die das von dem ersten Sensorsystem ausgegebene Signal für den zweiten Zähler aufbereitet. Vorteilhafterweise wird hier trotz der Verwendung nur eines Sensorsystems eine Zweikanaligkeit und damit Redundanz realisiert, welche die Anforderungen der funktionalen Sicherheit erfüllt.

In der alternativen Ausgestaltung umfasst der zweite Messkanal das zweite Sensorsystem und den zweiten Zähler, aber keine Umwandlungseinheit. In dieser Alternative ist ein separates zweites Sensorsystem vorgesehen, wodurch es möglich wird, die Redundanz noch weiter zu erhöhen. Beispielsweise kann das zweite Sensorsystem anders implementiert sein als das erste Sensorsystem.

In einer Ausgestaltung umfasst das erste Sensorsystem einen ersten optischen Sensor und eine damit gekoppelte erste Verarbeitungseinheit. Der erste optische Sensor ist dazu ausgebildet, weitestgehend alle Passagen über die Grenze zwischen dem sicheren und dem nicht sicheren Bereich optisch zu erfassen und daraus ein erstes Sensorsignal bereitzustellen. Die erste Verarbeitungseinheit ist dazu eingerichtet, das erste Sensorsignal nach mindestens einem vordefinierten ersten Merkmal zu verarbeiten und daraus ein Objektsignal bereitzustellen. Insbesondere ist der erste optische Sensor als Kamera ausgeführt.

Der erste optische Sensor umfasst beispielsweise eine klassische Sicherheitskamera. Ein derartiges sicheres Kamerasystem tastet seine Umgebung beispielsweise mit infraroten Laserstrahlen dreidimensional ab. Sobald sich ein Objekt im Sichtbereich oder Erfassungsbereich befindet, meldet das Kamerasystem die Detektion beispielsweise durch einen Signalwechsel in dem bereitgestellten Sensorsignal, hier das erste Sensorsignal. Die erste Verarbeitungseinheit wertet das erste Sensorsignal gemäß des mindestens einen vordefinierten Merkmals aus. Das erste Merkmal ist beispielsweise so vordefiniert, dass mit dem Objektsignal alle beim Überschreiten der Grenze detektierten Objekte weitergeleitet werden, die eine Person sein könnten. Beispielsweise wird das erste Merkmal bezüglich einer Höhe über dem Boden, einer räumliche Ausdehnung oder einer Bewegungsgeschwindigkeit definiert. Objekte, die aufgrund des ersten Merkmals weitestgehend eindeutig als Nichtperson erkannt werden, werden nicht mit dem Objektsignal weitergeleitet. Bei Einsatz einer auf den Bildraum oder den daraus abgeleiteten metrischen Raum bezogenen Mindestausdehnung des detektierten Objekts als erstes Merkmal, werden z.B. nur Objekte erkannt, die in zumindest einer einsehbaren Dimension sehr klein sind und damit bereits anatomisch keine Person sein können. Das erste Sensorsystem ist folglich daraufhin ausgelegt, in grenzwertigen Fällen bei der Unterscheidung zwischen Objekt und Person auch ein möglicherweise fälschlich als Person erkanntes Objekt mit dem Objektsignal weiterzuleiten.

In einer Ausgestaltung ist die Umwandlungseinheit dazu eingerichtet, ein von dem ersten Sensorsystem bereitgestelltes Signal nach mindestens einem vordefinierten zweiten Merkmal auszuwerten und daraus ein Personensignal bereitzustellen.

In der oben bereits geschilderten Ausführung der Zählvorrichtung, bei der das erste Sensorsystem im zweiten Messkanal wiederverwendet wird, wertet die Umwandlungseinrichtung das vom Sensorsystem bereitgestellte Signal, also das Objektsignal, weiter aus. Dafür wird das mindestens eine zweite vordefinierte Merkmal eingesetzt, beispielsweise mindestens ein spezifisches Merkmal für eine Person. Hierfür werden spezifische menschliche Konturen, wie zum Beispiel das vertikale Kopf-Schulter-Profil, eingesetzt. Weitere Beispiele sind personentypische Bewegungsmuster, z.B. eine beim Gehen normale Pendelbewegung oder eine erkannte, nicht einheitliche Bewegung innerhalb des Objekts, wie zum Beispiel von Armen, die sich relativ zum Körper bewegen. Demzufolge werden mit dem Personensignal weitestgehend nur Passagen weitergeleitet, die durch Personen erfolgt sind. Passagen durch Objekte, die mit an Sicherheit grenzender Wahrscheinlichkeit keine Person sind, werden somit nicht mit dem Personensignal weitergeleitet.

In einer Weiterbildung umfasst das zweite Sensorsystem einen zweiten optischen Sensor und eine damit gekoppelte zweite Verarbeitungseinheit. Der zweite optische Sensor ist dazu ausgebildet, weitestgehend alle Passagen über die Grenze zwischen dem sicheren und dem nicht sicheren Bereich optisch zu erfassen und daraus ein zweites Sensorsignal bereitzustellen. Die zweite Verarbeitungseinheit ist dazu eingerichtet, das zweite Sensorsignal nach mindestens einem vordefinierten dritten Merkmal auszuwerten und daraus ein Personensignal zu erzeugen. Der zweite optische Sensor ist dabei insbesondere als mehrlagiger Laserscanner ausgebildet.

Der zweite optische Sensor ist beispielsweise als dreidimensionaler Lidar, Englisch: Light Detection and Ranging, Sensor realisiert, der sein Sichtfeld in mehreren, beispielsweise vier, aufgespreizten Lagen, abtastet und zuverlässig Objekt erkennt. Die zweite Verarbeitungseinheit wertet das auf diese Weise bereitgestellte zweite Sensorsignal bezüglich des mindestens einen dritten vordefinierten Merkmals aus. Beispielsweise wird für das dritte vordefinierte Merkmal die Kontur eines Menschen, insbesondere die Kopf-Schulter-Partie verwendet. Folglich werden mit dem Personensignal nur die Passagen über die Grenze weitergeleitet, die das dritte vordefinierte Merkmale erfüllen und mit an Sicherheit grenzender Wahrscheinlichkeit nicht durch Objekte erfolgt sind.

Gemäß einer Weiterbildung weist die zweite Verarbeitungseinheit ein klassifizierendes neuronales Netz auf. Dieses ist darauf trainiert, das zweite Sensorsignal nach dem mindestens einen vordefinierten dritten Merkmal auszuwerten und das Personensignal auszugeben.

Für die Auswertung der mit dem zweiten Sensorsignal bereitgestellten 3D-Scandaten wird das klassifizierende neuronale Netz verwendet, welches vorab auf das mindestens eine dritte vordefinierte Merkmal trainiert wurde. Dieses Merkmal kann beispielsweise ein Muster einer typischen Kopf-Schulter-Partie eines Menschen sein. Das eingelernte Merkmal kann von dem lernenden System mit Vorteil als Basis zum automatischen Ableiten komplexer Signaturen eingesetzt werden.

Die zweite Verarbeitungseinheit kann als Software- oder Firmwaremodul separat von dem zweiten Sensor realisiert sein oder mit diesem integriert sein, beispielsweise auf einem Ansteuerbaustein, Englisch: Controller, des zweiten optischen Sensors. Entsprechend kann die erste Verarbeitungseinheit getrennt vom ersten optischen Sensor oder integriert mit demselben realisiert sein.

In einer Weiterbildung überlappt ein Erfassungsbereich des ersten Sensorsystems einen Erfassungsbereich des zweiten Sensorsystems. Alternativ stimmen die Erfassungsbereiche des ersten und des zweiten Sensorsystems überein. Dabei überdeckt ein jeweiliger Erfassungsbereich des ersten und des zweiten Sensorsystems die Grenze zwischen dem sicheren und dem nicht sicheren Bereich.

Der Erfassungsbereich kann auch als Sichtbereich bezeichnet werden. Es ist der räumliche Bereich, in dem der jeweilige Sensor Objekte detektiert. Dieser Sichtbereich ist in mindestens zwei voneinander getrennte Bereiche aufgeteilt, zwischen denen Durchtritte von Personen und Objekten in beiden Richtungen, hier bezeichnet als Passagen, von dem jeweiligen Sensor erfasst werden. Ein Bereich ist der sichere Bereich, der frei von gefährlichen Maschinen ist und somit für Personen sicher ist. Der zweite Bereich ist der nicht sichere oder Gefahrenbereich, in dem gefährliche Maschinen, beispielsweise ein Roboter, arbeiten. Zwischen beiden Bereichen besteht eine mehr oder weniger breite Grenze, die auch ein Grenzbereich sein kann. Der erste und der zweite optische Sensor erstellen jeweils unabhängig voneinander beispielsweise eine 3D-Tiefenkarte mit gleicher oder unterschiedlicher Auflösung von der Grenze zwischen dem sicheren und dem nicht sicheren Bereich und stellen das jeweilige Sensorsignal entsprechend bereit.

In einer Weiterbildung ist der erste Zähler dazu eingerichtet, durch Auswertung eines von dem ersten Sensorsystem bereitgestellten Signals, beispielsweise des Objektsignals, einen ersten Zählerstand zu bilden und diesen als erste Anzahl mit dem ersten Messsignal der Steuereinheit zuzuführen. Der zweite Zähler ist dazu eingerichtet, auf Basis des von dem ersten Sensorsystem bereitgestellten Signals oder auf Basis eines von dem zweiten Sensorsystem bereitgestellten Signals, beispielsweise des Personensignals, einen zweiten Zählerstand zu bilden und diesen als zweite Anzahl mit dem zweiten Messsignal der Steuereinheit zuzuführen.

Der erste Zähler zählt somit die Passagen, bzw. Übertrittsereignisse, die mit dem Objektsignal zugeführt werden. Bei einem Übertritt vom sicheren in den nicht sicheren Bereich wird der erste Zählerstand beispielsweise inkrementiert, wohingegen dieser bei einer Passage vom nicht sicheren in den sicheren Bereich dekrementiert wird. Somit zeigt der erste Zählerstand in diesem Beispiel die Anzahl von in dem nicht sicheren Bereich zu einem gewissen Zeitpunkt befindlichen Personen oder Objekte an. Der zweite Zähler basiert auf dem ersten Sensorsignal, welches von der Umwandlungseinheit weiter ausgewertet wurde, oder auf den vom zweiten Sensorsystem bereitgestellten Signal. Der zweite Zählerstand spiegelt somit die aus dem Personensignal ermittelte Anzahl an zu einem bestimmten Zeitpunkt im nicht sicheren Bereich befindlichen Personen wider. Die unterschiedliche Auswertung der jeweiligen Sensorsignale bedingt eine asymmetrische Struktur der Zählvorrichtung. Dies resultiert darin, dass die Zählerstände von erstem und zweitem Zähler unterschiedlich sein können. Im Normalfall sind erster und zweiter Zählerstand gleich. Eine Diskrepanz zwischen erstem und zweitem Zählerstand deutet jedoch auf ein fehlerhaftes Zählereignis hin. Die beschriebene Zählvorrichtung kann somit verwendet werden, um einen sicheren Personenzähler zu realisieren, der die Anforderungen der funktionalen Sicherheit erfüllt.

In einer Weiterbildung ist die Steuereinheit zum Bereitstellen des Ergebnissignals nach einer einstellbaren Verzögerungszeit eingerichtet.

Der Vergleich der mit dem ersten und zweiten Messsignal gelieferten ersten und zweiten Zählerstände erfolgt möglicherweise erst nach einer Latenzzeit, um kurzzeitige Ungleichheiten der Zählerstände, die von unterschiedlichen Reaktionszeiten der eingesetzten optischen Sensoren resultieren können, auszugleichen.

In einer Weiterbildung weist die Zählvorrichtung zusätzlich eine Bedien- und Anzeigeneinheit auf. Für den Fall, dass aus dem Ergebnissignal ersichtlich ist, dass die zweite Anzahl kleiner als die erste Anzahl ist, ist die Steuereinheit dazu eingerichtet, eine Differenz zwischen der zweiten und der ersten Anzahl optional zusammen mit einer Warnmeldung an der Bedien- und Anzeigeneinheit auszugeben, sowie den ersten und den zweiten Messkanal zu deaktivieren, bis die erste und die zweite Anzahl beispielsweise über die Bedien- und Anzeigeneinheit auf Null zurückgesetzt ist.

In dem Fall, in dem die zweite Anzahl kleiner als die erste Anzahl ist, hat der erste Zähler aus dem Objektsignal, welches unter Umständen mehr Passagen enthält, einen höheren Wert ermittelt als der zweite Zähler, der auf dem selektiveren Personensignal aufsetzt. Dies deutet darauf hin, dass fälschlicherweise ein Objekt als Person erkannt und gezählt wurde. Das Ereignis signalisiert also einen Fehlerzustand, welcher mit der Bedien- und Anzeigeneinheit auch einem Benutzer oder einer Steuerperson angezeigt wird. Daraufhin kann ein sicherer Zustand eingeleitet werden, unter Umständen durch manuelles Eingreifen. Eine weitere Erfassung von Passagen wird durch Deaktivierung des ersten und zweiten Messkanals unterbunden, bis die Zählerstände wieder zurückgesetzt wurden. Dabei bezieht sich der sichere Zustand auf eine gefährliche Maschine in dem nicht sicheren Bereich. Das Rücksetzen der Zählerstände kann beispielsweise manuell durch eine Person an der Anzeige- und Bedieneinheit erfolgen. Alternativ kann ein nachgelagertes unabhängiges System das Rücksetzen der Zählerstände automatisch durchführen.

In einer Weiterbildung ist die Steuereinheit dazu eingerichtet, eine Fehlermeldung an der Bedien- und Anzeigeneinheit auszugeben, wenn das Ergebnissignal anzeigt, dass die zweite Anzahl größer als die erste Anzahl ist. Die Steuereinheit ist weiter dazu eingerichtet, in diesem Fall den ersten und den zweiten Messkanal zu deaktivieren, bis die erste und die zweite Anzahl möglicherweise über die Bedien- und Anzeigeneinheit auf Null zurückgesetzt ist.

Wenn der auf Basis des selektiveren Personensignals ermittelte zweite Zählerstand einen höheren Wert anzeigt als der auf Basis des allgemeineren Objektsignals ermittelte erste Zählerstand, liegt unter Umständen ein grundsätzlicher Systemfehler in der Zählvorrichtung vor. Der mit dem Ergebnissignal signalisierte Fehlerzustand wird angezeigt und die weitere Erfassung und Zählung von Passagen wird vorübergehend ausgesetzt. Ein Rücksetzen der Zählerstände, beispielsweise manuell durch eine autorisierte Person, ist erforderlich, bevor die Zählvorrichtung weiter betrieben wird.

Die hierin beschriebene Zählvorrichtung bietet somit die Möglichkeit, aus den spezifischen Unterschieden der beiden Messkanäle, die unter Umständen zu unterschiedlichen Zählerständen führen, unterschiedliche Systemreaktionen abzuleiten. Wenn die Zählerstände voneinander abweichen, wird ausgewertet, welcher Zähler den höheren Wert zeigt, und entsprechend reagiert. Im Allgemeinen sind beide Messkanäle in der Lage, zuverlässig Durchtritte von Personen über die Grenze zwischen dem sicheren und dem nicht sicheren Bereich zu zählen, weshalb der erste und der zweite Zählerstand im Normalfall identisch sind. Abweichungen gibt es nur in Sonderfällen, wenn zum Beispiel durch das Mitführen von Objekten oder durch das Verdecken von Teilen einer Person die Merkmale weniger eindeutig sind. Die Logik der Steuereinheit ist damit so ausgelegt, dass beim Eintritt in den nicht sicheren Bereich nie zu wenige Personen gezählt werden und beim Verlassen des Gefahrenbereichs nie zu viele Personen gezählt werden. Damit reduzieren sich fehlerhafte Zählereignisse auf Verfügbarkeitsprobleme, da die Anzahl der im nicht sicheren Bereich befindlichen Personen immer überschätzt wird. Zudem erlaubt es die vorgeschlagene Lösung, fehlerhafte Zählereignisse, die unter bestimmten Bedingungen entstanden sind, automatisch zu korrigieren. Beispielsweise in Fällen, in denen die verfügbaren Informationen, die mit dem ersten und dem zweiten Sensorsignal geliefert werden, beispielsweise nicht für eine zuverlässige Zählung ausreichen. In diesen Fällen schaltet die Steuereinheit die Zählvorrichtung ab, wodurch ein gefahrbringender Ausfall vermieden wird.

In einer Weiterbildung weist die Zählvorrichtung ein mit der Steuereinheit gekoppeltes Funkortungssystem auf. Das Funkortungssystem ist dazu eingerichtet, auf Basis von Funkortungsetiketten, auch bezeichnet als Englisch: Tags, Passagen über die Grenze zwischen dem sicheren und dem nicht sicheren Bereich zu erfassen, nach mindestens einem vordefinierten vierten Merkmal zu klassifizieren und daraus eine Anzahl von Passagen mit einem dritten Zähler zu ermitteln. Die Steuereinheit ist des Weiteren dazu eingerichtet, bei Anzeige eines Fehlerzustands im Ergebnissignal, die zweite Anzahl mit einem Stand des dritten Zählers zu vergleichen und bei Übereinstimmung die erste und die zweite Anzahl auf Null zurückzusetzen.

In dieser Weiterentwicklung wird die Zählvorrichtung durch das Funkortungssystem ergänzt und erweitert. Dieses kann als Radiofrequenzortungssystem, Englisch: Radio Frequency Identification, RFID, oder als Breitbandfunkortungssystem basierend auf Englisch: Ultra Wide Band, UWB, Technik realisiert sein. Die von den Tags übermittelte Identifikationsnummer ermöglicht eine Unterscheidung zwischen Personen und Objekten. Das vordefinierte vierte Merkmal kennzeichnet also eine Zuordnung zwischen der von dem Etikett übermittelten ID zu entweder einer Person oder einem Objekt. Entsprechend wird der dritte Zähler bei Passagen der Grenze durch Personen analog zu den Zählrichtungen des ersten und zweiten Zählers inkrementiert und dekrementiert. Bei Auftritt eines Fehlerzustands kann dieser dritte Zähler ergänzend betrachtet werden, um ein automatisches Rücksetzen des ersten und zweiten Zählers einzuleiten. Damit kann mit Vorteil eine Korrektur der Zähler in Echtzeit erfolgen, ohne dass es zu Verfügbarkeitseinbußen kommt.

Zusätzlich können bei der Auswertung des Ergebnissignals ergänzende Informationen verwendet werden, die von dezentralen Überwachungseinrichtungen, z.B. weiteren Laserscannern, im Grenzbereich erhoben werden. Auch Zeitreiheninformationen, die die Zustände von vor und nach einer Passage widerspiegeln, können eingesetzt werden.

Alternativ zu den oben beschriebenen optischen Sensorsystemen des ersten und zweiten Messkanals können hier auch andere Sensortechnologien, beispielsweise Radar, Drucksensoren im Boden, oder/und Funkortung mittels RFID bzw. UWB, eingesetzt werden. Die erste und/oder die zweite Verarbeitungseinheit kann konventionell oder auf Basis von künstlicher Intelligenz implementiert sein, solange die Grundidee der vorliegenden Erfindung beachtet wird, dass der erste Messkanal sehr zuverlässig möglichst alle Passagen über die Grenze, im Zweifelsfall auch durch Nichtpersonen, ermittelt und der zweite Messkanal demgegenüber restriktiver die Passagen durch Personen ermittelt.

Weiterer Gegenstand der Erfindung ist ein Verfahren zum sicheren Erfassen von Passagen über eine Grenze zwischen einem sicheren und einem nicht sicheren Bereich. Das Verfahren ist für ein Sicherheitssystem zur Absicherung eines Gefahrenbereichs in der Fabrikautomation ausgelegt und weist folgende Schritte auf: Erfassen einer ersten Anzahl von Passagen über die Grenze,
Erfassen einer zweiten Anzahl von Passagen über die Grenze,
Vergleich der ersten Anzahl mit der zweiten Anzahl,
Bereitstellen eines Ergebnissignals auf Basis des Vergleichs,
wobei das Ergebnissignal einen Fehlerzustand anzeigt, wenn die erste Anzahl ungleich der zweiten Anzahl ist.

Gemäß der dieser Anmeldung zugrundeliegenden Idee werden Passagen über die Grenze zwischen dem sicheren und dem nicht sicheren Bereich zweimal auf unterschiedliche Art und Weise erfasst und aus dem Vergleich der jeweils ermittelten Anzahlen wird Erkenntnis darüber gewonnen, ob die ermittelten Anzahlen tatsächlich richtig sind. Ein Nichtübereinstimmen der beiden Anzahlen ist demzufolge ein Indikator für einen Fehlerzustand.

In einer möglichen Ausprägung wird das Verfahren von der oben beschriebenen Zählvorrichtung ausgeführt. Im Übrigen gelten für das Verfahren die Ausführungen zu der erfindungsgemäßen Zählvorrichtung entsprechend, insbesondere hinsichtlich Vorteilen und Ausführungsformen.

Die genannten Ausführungsformen können untereinander kombiniert werden, sofern sich nicht explizit etwas anderes ergibt.

Die Erfindung wird nachfolgend beispielhaft anhand der Figuren näher erläutert. Funktions- bzw. wirkungsgleiche Bauelemente tragen gleiche Bezugszeichen. Es zeigen:
- Fig. 1: eine erste beispielhafte Ausführungsform einer Zählvorrichtung wie vorgeschlagen,
- Fig. 2: eine zweite beispielhafte Ausführungsform der Zählvorrichtung wie vorgeschlagen,
- Fig. 3: ein Ausführungsbeispiel eines Verfahrens wie vorgeschlagen, und
- Fig. 4: ein beispielhaftes Anwendungsszenario.

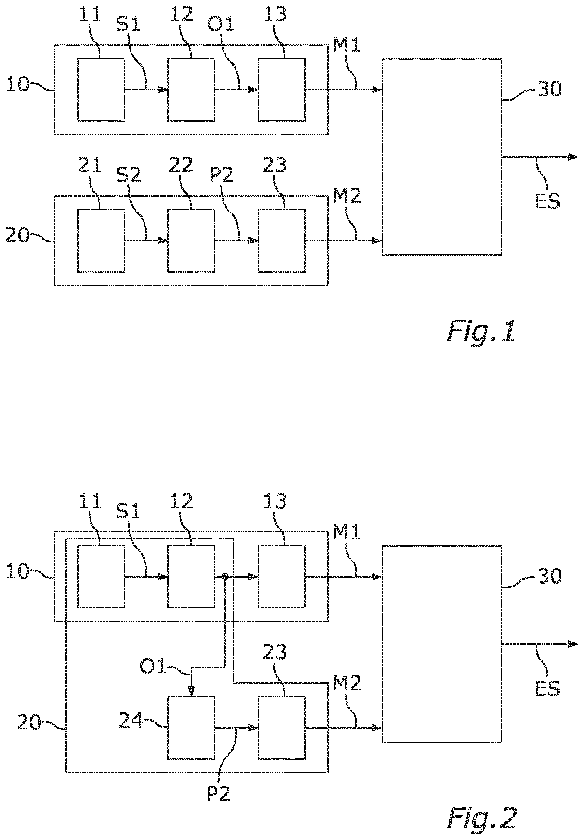

Fig. 1 zeigt eine erste beispielhaften Ausführungsform einer Zählvorrichtung wie vorgeschlagen. Die Zählvorrichtung weist einen ersten Messkanal 10, einen zweiten Messkanal 20 und eine Steuereinheit 30 auf. Im ersten Messkanal 10 erfasst ein erster optischer Sensor 11 weitestgehend alle Passagen über eine Grenze zwischen einem nicht sicheren und einem sicheren Bereich und erzeugt daraus das erste Sensorsignal S1. Die erste Verarbeitungseinheit 12 wertet das erste Sensorsignal S1 nach mindestens einem vorgegebenen ersten Merkmal aus und erzeugt daraus das Objektsignal O1. Das Objektsignal O1 umfasst damit beispielsweise alle Passagen über die Grenze, die durch eine Person erfolgt sein könnten. Der erste Zähler 13 zählt die mit dem Objektsignal O1 übermittelten Passagen gemäß ihrer Richtung und stellt mit dem ersten Messsignal M1 seinen Zählerstand bereit.

Parallel dazu erfasst ein zweiter optischer Sensor 21 im zweiten Messkanal 20 zeitgleich zum ersten Messkanal 10 ebenfalls weitestgehend alle Passagen über die Grenze zwischen dem sicheren und dem nicht sicheren Bereich und stellt das zweite Sensorsignal S2 bereit. Dieses wird in der zweiten Verarbeitungseinheit 22 gemäß mindestens eines dritten vordefinierten Merkmals ausgewertet. Das Ergebnis wird mit dem Personensignal P2 ausgegeben. Verglichen mit dem Objektsignal O1 ist das Personensignal P2 restriktiver, nachdem das dritte Merkmal eine genauere Selektion der Übertrittsereignisse bewirkt. Somit erhält der dritte Zähler 23 mit dem Personensignal P2 alle Passagen, die wie im dritten Merkmal vorgegeben, möglichst ausschließlich durch Personen erfolgt sind, und ermittelt daraus deren Anzahl. Der Zählerstand des zweiten Zählers 23 wird mit dem zweiten Messsignal M2 an die Steuereinheit 30 übermittelt. Diese vergleicht den Stand des ersten Zählers 13 mit dem Stand des zweiten Zählers 23 und erzeugt ein entsprechendes Ergebnissignal ES. Sofern die beiden Zählerstände nicht übereinstimmen, wird mit dem Ergebnissignal ES ein Fehlerzustand angezeigt.

Sowohl der erste als auch der zweite optische Sensor 11, 21 umfassen jeweils mindestens eine geeignete Kamera im Einklang mit obiger Beschreibung. Für einen oder beide optische Sensoren 11, 21 können auch mehrere Kameras eingesetzt werden, deren Sensorsignale jeweils zu einem Signal, nämlich dem ersten oder dem zweiten Sensorsignal S1, S2 in geeigneter Art und Weise zusammengeführt werden. Die Steuereinheit 30 kann auf einem separaten Gerät bzw. Rechner implementiert sein. Alternativ wird die Steuereinheit 30 beispielsweise auf einem Chip des ersten oder des zweiten optischen Sensorsystems realisiert.

Fig. 2 zeigt eine zweite beispielhafte Ausführungsform der Zählvorrichtung wie vorgeschlagen. Im Unterschied zur Fig. 1 wird das erste optische Sensorsystem 11, 12 im zweiten Messkanal 20 wiederverwendet. Zusätzlich ist hier die Umwandlungseinheit 24 vorgesehen, welche aus dem Objektsignal O1 durch Auswertung gemäß vordefiniertem zweitem Merkmal das Personensignal P2 erzeugt und dem zweiten Zähler 23 zuführt. Dabei kann das zweite vordefinierte Merkmal in ähnlicher Art und Weise definiert sein wie das bereits beschriebene dritte vordefinierte Merkmal.

Auch in der Umwandlungseinheit 24 können zur Klassifizierung der Passagen durch Personen Methoden der künstlichen Intelligenz eingesetzt werden. Beispielsweise wird hierfür ein sogenanntes Englisch: Convolutional Neural Network, also ein konvolutionales neuronales Netz verwendet. Dieses wird vorab mit synthetischen oder realen Trainingsdaten trainiert. Dazu werden annotierte oder gelabelte Trainingsdaten verwendet, die jeweils eine Person oder ein Objekt zeigen. Damit wird eine klassifizierende Personen- und Objekterkennung ermöglicht, welche der Erzeugung des Personensignals P2 zugrunde liegt.

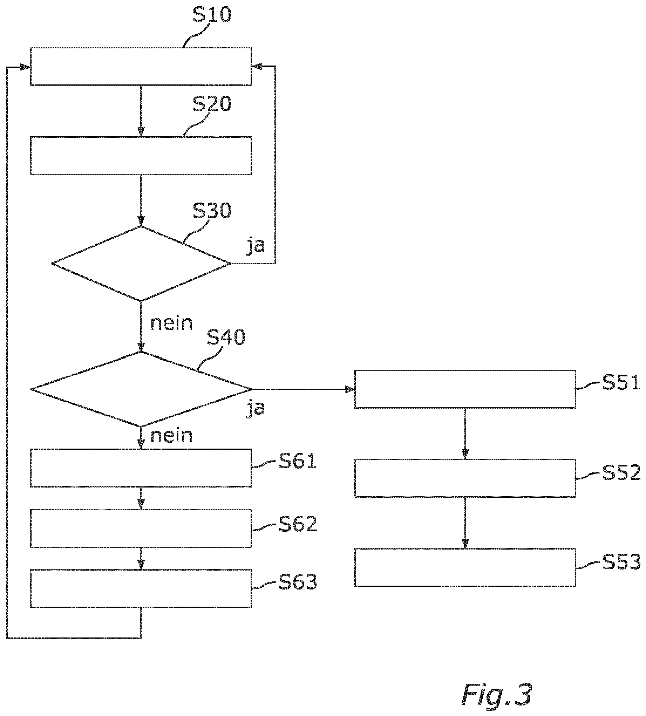

Fig. 3 zeigt ein Ausführungsbeispiel eines Verfahrens wie vorgeschlagen. Im Schritt S10 startet die Durchgangsüberwachung, der das vorgeschlagene Verfahren zum sicheren Erfassen von Passagen über die Grenze zwischen dem sicheren und dem nicht sicheren Bereich zugrunde liegt. Im Schritt S20 wird ein Durchgang, bzw. eine Passage über die Grenze, festgestellt. Die Steuereinheit vergleicht nun im Schritt S30, ob die Zählerstände des ersten und des zweiten Zählers identisch sind. Sofern dies der Fall ist, wird die laufende Durchgangsüberwachung mit Schritt S10 fortgesetzt. Falls dies nicht der Fall ist, wenn also die Zählerstände voneinander abweichen, wird in Schritt S40 überprüft, ob der zweite Zählerstand größer als der erste Zählerstand ist. Falls dies zutrifft, erkennt die Steuereinheit, dass ein Fehler vorliegt und leitet mit Schritt S51 einen Fehlerzustand ein. Anschließend wird im Schritt S52 ein Resetlevel auf hoch gesetzt, was bedeutet, dass ein Rücksetzen der Zählerstände nur unter bestimmten Bedingungen, zum Beispiel manuell mit hohem Autorisierungslevel, möglich ist. Die weitere Ausführung der laufenden Durchgangsüberwachung wird im Schritt S53 in diesem Fall gestoppt.

Sofern in Schritt S40 ermittelt wird, dass der gegenteilige Fall vorliegt und der erste Zählerstand kleiner als der zweite Zählerstand ist, wird in Schritt S61 die Differenz bzw. Diskrepanz zwischen den beiden Zählerständen angezeigt. In diesem Fall wurde mit hoher Wahrscheinlichkeit ein Objekt fälschlicherweise als Person gewertet. Um diese Vermutung zu überprüfen, wird im Schritt S62 der sichere Zustand der im nicht sicheren Bereich arbeitenden Maschine eingeleitet. Anschließend wird in Schritt S63 das Resetlevel auf moderat eingestellt, da es sich hierbei um einen bestimmungsgemäßen Fehler handelt. Ein Rücksetzen der Zähler kann dann beispielsweise durch eine mit dem Arbeitsumfeld des nicht sicheren Bereichs vertraute Person erfolgen. Die laufende Durchgangsüberwachung wird dann mit Schritt S10 wiederaufgenommen.

Das Verfahren kann mit der in Fig. 1 oder Fig. 2 gezeigten Vorrichtung durchgeführt werden.

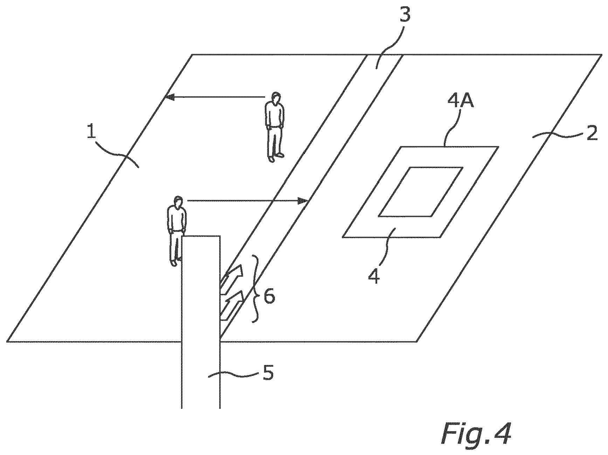

Fig. 4 zeigt ein beispielhaftes Anwendungsszenario für die vorgeschlagene Zählvorrichtung. Dargestellt ist der sichere Bereich 1, der nicht sichere Bereich 2 mit der dazwischenliegenden Grenze oder dem Grenzbereich 3. Das Szenario befindet sich beispielsweise in einer Fabrikhalle. Im nicht sicheren Bereich 2 befindet sich beispielhaft eine Maschine 4 mit einem umlaufenden Gefahrenbereich 4a. Ein Sicherheitssystem 5 ist so angeordnet, dass es den Gefahrenbereich 4a absichern kann. Das Sicherheitssystem 5 ist unter anderem ausgestattet mit der erfindungsgemäßen Zählvorrichtung 6, die hier beispielhaft durch zwei optische Sensoren angedeutet ist. Die Zählvorrichtung 6 ermittelt zuverlässig und unter Einhaltung der Anforderungen der funktionalen Sicherheit, die Anzahl der im nicht sicheren Bereich befindlichen Personen und ermöglicht damit dem Sicherheitssystem 5 die zuverlässige Absicherung des Gefahrenbereichs 4a.

### Bezugszeichenliste

- 10, 20: Messkanal
- 11, 21: optischer Sensor
- 12, 22: Verarbeitungseinheit
- 13, 23: Zähler
- S1, S2: Sensorsignal
- O1, P2, M1, M2, ES: Signal
- 30: Steuereinheit
- 1: sicherer Bereich
- 2: nicht sicherer Bereich
- 3: Grenze
- 4: Maschine
- 4a: Gefahrenbereich
- 5: Sicherheitssystem
- 6: Zählvorrichtung
- S10, S20, S30, S40: Schritt
- S51, S52, S53: Schritt
- S61, S62, S63: Schritt

## Patentansprüche

1. Zählvorrichtung (6) für ein Sicherheitssystem (5) zur Absicherung eines Gefahrenbereichs in der Fabrikautomation aufweisend
einen ersten Messkanal (10) zum Bereitstellen eines ersten Messsignals (M1) in Abhängigkeit einer von dem ersten Messkanal (10) erfassten ersten Anzahl von Passagen über eine Grenze (3) zwischen einem sicheren und einem nicht sicheren Bereich (1, 2),
einen zweiten Messkanal (20) zum Bereitstellen eines zweiten Messsignals (M2) in Abhängigkeit einer von dem zweiten Messkanal (20) erfassten zweiten Anzahl von Passagen über die Grenze (3) zwischen dem sicheren und dem nicht sicheren Bereich (1, 2), und
eine Steuereinheit (30) zum Bereitstellen eines Ergebnissignals (ES) in Abhängigkeit eines Vergleichs der ersten Anzahl mit der zweiten Anzahl, wobei das Ergebnissignal (ES) dazu geeignet ist, einen Fehlerzustand zu signalisieren, wenn die erste Anzahl ungleich der zweiten Anzahl ist.

2. Vorrichtung nach Anspruch 1,
wobei der erste Messkanal (10) ein erstes Sensorsystem (11,12) und einen damit verbundenen ersten Zähler (13) umfasst,
wobei der zweite Messkanal (20) das erste Sensorsystem (11, 12), eine damit verbundene Umwandlungseinheit (24) und einen damit verbundenen zweiten Zähler (23) umfasst, oder wobei der zweite Messkanal (20) ein zweites Sensorsystem (21, 22) und den zweiten Zähler (23) umfasst, welcher mit dem zweiten Sensorsystem (21, 22) verbunden ist.

3. Vorrichtung nach Anspruch 2,
wobei des erste Sensorsystem einen ersten optischen Sensor (11), insbesondere eine Kamera, und eine damit gekoppelte erste Verarbeitungseinheit (12) umfasst, wobei der erste optische Sensor (11) dazu ausgebildet ist, weitestgehend alle Passagen über die Grenze (3) zwischen dem sicheren und dem nicht sicheren Bereich (1, 2) optisch zu erfassen und daraus ein erstes Sensorsignal (S1) bereitzustellen,
wobei die erste Verarbeitungseinheit (12) dazu eingerichtet ist, das erste Sensorsignal (S1) nach mindestens einem vordefinierten ersten Merkmal zu verarbeiten und daraus ein Objektsignal (O1) bereitzustellen.

4. Vorrichtung nach Anspruch 2,
wobei die Umwandlungseinheit (24) dazu eingerichtet ist, ein von dem ersten Sensorsystem bereitgestelltes Signal nach mindestens einem vordefinierten zweiten Merkmal auszuwerten und daraus ein Personensignal (P2) bereitzustellen.

5. Vorrichtung nach einem der Ansprüche 2 bis 4,
wobei das zweite Sensorsystem einen zweiten optischen Sensor (21), insbesondere einen mehrlagigen Laserscanner, und eine damit gekoppelte zweite Verarbeitungseinheit (22) umfasst,
wobei der zweite optische Sensor (21) dazu ausgebildet ist, weitestgehend alle Passagen über die Grenze (3) zwischen dem sicheren und dem nicht sicheren Bereich (1, 2) optisch zu erfassen und daraus ein zweites Sensorsignal (S2) bereitzustellen,
wobei die zweite Verarbeitungseinheit (22) dazu eingerichtet ist, das zweite Sensorsignal (S2) nach mindestens einem vordefinierten dritten Merkmal auszuwerten und daraus ein Personensignal (P2) zu erzeugen.

6. Vorrichtung nach Anspruch 5,
wobei die zweite Verarbeitungseinheit (22) ein klassifizierendes neuronales Netz aufweist, welches darauf trainiert ist, das zweite Sensorsignal (S2) nach dem mindestens einen vordefinierten dritten Merkmal auszuwerten und das Personensignal (P2) auszugeben.

7. Vorrichtung nach einem der Ansprüche 2 bis 6,
wobei ein Erfassungsbereich des ersten Sensorsystems (11, 12) einen Erfassungsbereich des zweiten Sensorsystems (21, 22) überlappt oder mit diesem übereinstimmt, und
wobei der Erfassungsbereich des ersten Sensorsystems (11, 12) und der Erfassungsbereich des zweiten Sensorsystems (21, 22) jeweils die Grenze (3) zwischen dem sicheren und dem nicht sicheren Bereich (1, 2) überdeckt.

8. Vorrichtung nach dem Anspruch 2,
wobei der erste Zähler dazu eingerichtet ist, auf Basis eines von dem ersten Sensorsystem (11, 12) bereitgestellten Signals (O1) einen ersten Zählerstand zu bilden und diesen als erste Anzahl mit dem ersten Messsignal (M1) der Steuereinheit (30) zuzuführen, und
wobei der zweite Zähler dazu eingerichtet ist, auf Basis des von dem ersten Sensorsystem (11, 12) bereitgestellten Signals (O1) oder auf Basis eines von dem zweiten Sensorsystem (21, 22) bereitgestellten Signals (O2) einen zweiten Zählerstand zu bilden und diesen als zweite Anzahl mit dem zweiten Messsignal (M2) der Steuereinheit (30) zuzuführen.

9. Vorrichtung nach einem der vorstehenden Ansprüche,
wobei die Steuereinheit (30) zum Bereitstellen des Ergebnissignals (ES) nach einer einstellbaren Verzögerungsszeit eingerichtet ist.

10. Vorrichtung nach einem der vorstehenden Ansprüche,
weiter aufweisend eine Bedien- und Anzeigeeinheit,
wobei wenn das Ergebnissignal (ES) anzeigt, dass die zweite Anzahl kleiner als die erste Anzahl ist, die Steuereinheit (30) dazu eingerichtet ist, eine Differenz zwischen der zweiten und der ersten Anzahl und insbesondere eine Warnmeldung an der Bedien- und Anzeigeneinheit auszugeben, und den ersten und den zweiten Messkanal (10, 20) zu deaktivieren, bis die erste und die zweite Anzahl insbesondere über die Bedien- und Anzeigeeinheit auf Null zurück gesetzt ist.

11. Vorrichtung nach dem vorstehenden Anspruch,
wobei wenn das Ergebnissignal (ES) anzeigt, dass die zweite Anzahl größer als die erste Anzahl ist, die Steuereinheit (30) dazu eingerichtet ist, eine Fehlermeldung an der Bedien- und Anzeigeneinheit auszugeben, und den ersten und den zweiten Messkanal (10, 20) zu deaktivieren, bis die erste und die zweite Anzahl insbesondere über die Bedien- und Anzeigeeinheit auf Null zurück gesetzt ist.

12. Vorrichtung nach einem der vorstehenden Ansprüche,
weiter aufweisend ein mit der Steuereinheit (30) gekoppeltes Funkortungssystem , welches dazu eingerichtet ist, auf Basis von Funkortungsetiketten Passagen über die Grenze (3) zwischen dem sicheren und dem nicht sicheren Bereich (1, 2) zu erfassen, nach zumindest einem vordefinierten vierten Merkmal zu klassifizieren und daraus eine Anzahl von Passagen mit einem dritten Zähler zu ermitteln,
wobei die Steuereinheit (30) weiter dazu eingerichtet ist, bei Anzeige eines Fehlerzustands im Ergebnissignal (ES), die zweite Anzahl mit einem Stand des dritten Zählers zu vergleichen und bei Übereinstimmung die erste und die zweite Anzahl auf Null zurückzusetzen.

13. Verfahren zum sicheren Erfassen von Passagen über eine Grenze (3) zwischen einem sicheren und einem nicht sicheren Bereich (1, 2), wobei das Verfahren für ein Sicherheitssystem (5) zur Absicherung eines Gefahrenbereichs in der Fabrikautomation ausgelegt ist und folgende Schritte aufweist:
Erfassen einer ersten Anzahl von Passagen über die Grenze (3),
Erfassen einer zweiten Anzahl von Passagen über die Grenze (3),
Vergleich (S30) der ersten Anzahl mit der zweiten Anzahl,
Bereitstellen eines Ergebnissignals auf Basis des Vergleichs,
wobei das Ergebnissignal einen Fehlerzustand anzeigt, wenn die erste Anzahl ungleich der zweiten Anzahl ist.

14. Verfahren nach dem vorstehenden Anspruch,
wobei wenn der Vergleich (S30) ergibt, dass die zweite Anzahl kleiner als die erste Anzahl ist, das Verfahren zusätzlich folgende Schritte umfasst:
Anzeigen einer Differenz (S61) zwischen der zweiten und der ersten Anzahl, und insbesondere Ausgeben einer Warnmeldung,
Deaktivieren (S63) des Erfassens der ersten und der zweiten Anzahl solange bis ein Rücksetzen der ersten und der zweiten Anzahl auf Null erfolgt, Neustart des Verfahrens.

15. Verfahren nach Anspruch 13 oder 14,
wobei wenn der Vergleich ergibt, dass die erste Anzahl kleiner als die zweite Anzahl ist, das Verfahren zusätzlich folgende Schritte umfasst:
Ausgeben (S51) einer Fehlermeldung,
Deaktivieren (S52) des Erfassens der ersten und der zweiten Anzahl solange bis ein Rücksetzen der ersten und der zweiten Anzahl auf Null erfolgt Beenden des Verfahrens.
